# EUROPÄISCHE PATENTSCHRIFT

(11) **EP 0 676 077 B1**
(45) Veröffentlichungstag und Bekanntmachung des Hinweises auf die Patenterteilung: **12.03.1997**
(21) Anmeldenummer: 94902609.0
(22) Anmeldetag: 20.12.1993
(51) Int. Cl.: G09B 15/02

(54) **LERNGERÄT**
TEACHING DEVICE
APPAREIL DIDACTIQUE

(30) Priorität: 23.12.1992 DE 9217603 U; 08.04.1993 DE 9305376 U
(43) Veröffentlichungstag der Anmeldung: 11.10.1995
(73) Patentinhaber: GLENN, Catharine Helena, D-79400 Kandern (DE)
(72) Erfinder: GLENN, Catharine Helena, D-79400 Kandern (DE)
(74) Vertreter: Allgeier, Kurt
(86) Internationale Anmeldenummer: DE9301222
(87) Internationale Veröffentlichungsnummer: WO9415324

(56) Entgegenhaltungen:
- FR-A- 2 105 596
- GB-A- 117 562
- GB-A- 2 046 980
- US-A- 1 803 630
- US-A- 4 464 971

## Beschreibung

Die Erfindung betrifft ein Lerngerät zum Notenlernen mit einer ebenen zwei- oder mehrteiligen, zusammenklappbaren Tafel aus einem nahezu formsteifen Werkstoff mit einer beschrift- oder bedruckbaren, mit einer Haftfilz- oder Magnetfolie oder einer mit vergleichbaren Haftmitteln versehenen Folie bedeckten Arbeitsoberfläche, die gut erkennbare, nicht ablösbare und aus Notenlinien bestehende Notensysteme aufweist, wobei das Lerngerät leichte, an ihrer Unterseite mit Kletten- oder Magnet- oder dgl. Haftmitteln versehene Formkörper in Gestalt von sämtlichen beim Notensetzen im Gebrauch befindlichen Husiknotenzeichen und Musik-Hilfszeichen aufweist, die von Hand leicht aufbringbar und ablösbar auf der Folie der Arbeitsoberfläche befestigbar sind, wobei die Musiknotenzeichen, aus einem formsteifen oder leicht plastisch verformbaren Kautschuk bestehen und an ihrer Oberfläche farbbeschichtet sind oder aus Materialien unteschiedlicher Farbe bestehen.

Durch die US-PS 44 64 971 ist ein derartiges Lerngerät bekannt, das aus einer ein- oder mehrteiligen, in letzterem Fall zusammenklappbaren Tafel besteht. Auf der Arbeitsoberfläche des Geräts sind mittels Haftmitteln aus Notenlinien bestehende Notensysteme in einem vergrösserten Massstab wieder entfernbar aufgebracht, auf denen wiederum Formteile in Form von Zeichen und Symbolen der Notenschrift und anderer Musik-Hilfszeichen ebenfalls mit Haftmitteln, vorzugsweise Klettverbindungen, lösbar angebracht werden können und immer wieder neu zusammengestellt werden können. Ausserdem können noch weitere Hilfsmittel angebracht werden, wie z.B. mehrere übereinander liegende, durchsichtige Folien, auf denen Zeichen und Symbole der Notenschrift einzeln oder gruppiert aufgetragen sind. Ein solcher Foliensatz kann im oberen Bereich der Tafel befestigt werden, und die Folien können dann einzeln oder zu mehreren aus einer zurückgeschlagenen Position über die Arbeitsfläche gelegt werden, so dass sich die darauf befindlichen Zeichen im Notensystem ausgerichtet, gegenseitig und/oder mit den anheftbaren Formteilen sinnvoll ergänzen. Dieses bekannte Gerät ist in seiner Einsetzbarkeit jedoch beschränkt. Insbesondere können die einzelnen Folien des Foliensatzes, die eigentlich als eine Art Vorgabe des Lehrers an den Lernenden dienen sollen, leicht verrutschen und müssen, wenn die Tafel zusammengeklappt und z.B. in einer Schulmappe an einen anderen Ort transportiert werden soll, zusammengelegt oder als Set ganz entfernt werden.

Die Aufgabe der Erfindung bezieht sich sonach auf ein an sich bekanntes Lerngerät, wie es im Oberbegriff des Patentanspruchs 1 bechrieben ist, und sie besteht darin, dieses Lerngerät mit zusätzlichen technischen Elementen zu versehen und dadurch zu vervollständigen, um eine breitere und universellere Palette von Benutzungsmöglichkeiten zu schaffen. Insbesondere soll die Lage zumindest eines Teils der Musiknotenzeichen und Musik-Hilfszeichen auch während des Transports des Lerngerätes in zusammengeklapptem Zustand unveränderlich beibehalten werden können.

Erfindungsgemäss wird dies dadurch erreicht, dass das Lerngerät weitere Musiknotenzeichen und Musik-Hilfszeichen wiedergebende Druckstöcke oder Stempel mit je einem Haltegriff und einer mit diesem verbundenen, den Farbstoff aufnehmenden, Markierungsstriche aufweisenden und aus Gummi bestehenden Markierungsplatte aufweist und ausserdem aus einem festen oder plastisch verformbaren oder auch aus einem transparenten Werkstoff bestehende Notentabellen von im wesentlichen rechteckigen Format aufweist, auf denen Noten in ihrer Lage im Notensystem mit ihren Namensbezeichnungen und dem zugehörigen Notenschlüssel aufgebracht sind; weiter weist das Lerngerät Abdeckplatten zum teilweisen Abdecken der Arbeitsoberfläche auf, die wenigstens einen Ausschnitt aufweisen, welcher gerade gross genug ist, um einzelne Musiknoten oder einige Musiknoten zur Betrachtung freizugeben. Das Lerngerät weist im zusammengeklappten Zustand der Tafel ein in einer Schul- oder Tragemappe unterzubringendes Format auf.

Das Gerät ist geeignet, insbesondere Kinder schon etwa ab dem 4. Lebensjahr im Notenlesen und Notenlernen spielerisch einzuüben. Das lernende Kind kann vorgegebene oder auch von ihm selbst entwickelte Noten, Intervalle, Tonfolgen und Motive zunächst immer wieder neu visuell "erleben" und sich einprägen und schliesslich variieren und verändern. Mit Hilfe der Druckstöcke oder Stempel lassen sich Musiknoten- oder Musik-Hilfszeichen mittels eines zwar haftenden aber wieder abwischbaren Farbstoffs auf die Arbeitsoberfläche aufdrükken, wobei die Möglichkeit besteht, z.B. unterschiedlichen Notenwerten und zugehörigen Pausezeichen unterschiedliche Farben zu geben und so den Lernprozess zu unterstützen. Die mit den Druckstöcken oder Stempeln als Vorgabe aufgedrückten Zeichen können nicht unbeabsichtigt gelöscht oder verändert werden und auch beim Transport der Tafel in einer Mappe nicht verrutschen und können so weitere Male zur Verfügung stehen, bis sie bewusst gelöscht oder verändert werden.

Die erwähnten Notentabellen weisen vorzugsweise eine beidseitige oder allseitige Randverstärkung auf und sind mit wechselseitig zusammenwirkenden Befestigungsmitteln zur Herstellung einer kraftschlüssigen Befestigungsverbindung auf der Arbeitsoberfläche versehen. Die Notentabellen sind besonders geeignet, den Lernenden die Notennamen leicht finden zu lassen. Es sind für alle (gängigen) Instrumente und, wenn es gewünscht wird, auch fremdsprachig die Stellen im Notensystem leicht erkennbar und ablesbar, an denen die Notensymbole für eine bestimmte Tonfolge befestigt werden müssen. Dabei können die Notentabellen, wenn sie beidseitig an der Tafel angebracht sind, auch zweiteilig sein; sie können scharnierartig verbunden oder mittels Führungselementen teleskopartig über- und ineinander verschiebbar sein.

Die dünnwandigen, auf ihrer Rückseite ein Haftmittel aufweisenden Formkörper können mit einer leichtabziehbaren Schutzfolie versehen sein, um Beschädigungen zu vermeiden.

Nach einer weiteren Ausgestaltung der Erfindung können ausser den Notentabellen auch mit Notensystemen versehene Notenfolien von kleinerem Format als die Tafel, bestehend aus einem tranparenten, nahezu formsteifen oder leicht plastisch verformbaren Werkstoff auf die Tafel mit dem feststehenden Notensystem gegenüber diesem in verschiedenen Höhen- und Breitenlagen versetzt auflegbar sein. So ist es möglich, auf den Notenfolien vorgegebene Rhythmen, Akkorde, Intervalle oder sonstige Ton- und Melodiefolgen im Notensystem zu verschieben, wobei auch die Vorzeichen verschieden gesetzt und wieder verändert werden können; so kann auch das Transponieren geübt werden. Die Notensysteme auf den Folien und auf der Arbeitsoberfläche sind dazu im gleichen Hassstab gehalten.

Die auf der Tafel ein- oder beidseitig vorgesehenen, farblich gegenüber der Oberfläche und den Farben der Formkörper kontrastierenden Notensysteme haben vorteilhafterweise gegenüber den Normalabmessungen vergrösserte Abstände der Notenlinien von 12 bis 20 mm. Dies erleichtert insbesondere kleineren Kindern den Umgang mit dem Gerät.

Weiter kann das auf der Arbeitsoberfläche angeordnete Notensystem durch Auflage einer Folie mit senkrecht zu den vorhandenen Notenlinien verlaufenden Linien ergänzt werden, so dass beispielsweise schon vorhandene Tonfolgen und Rhythmen variiert oder vervollständigt werden können.

Vorteilhafterweise sind die Formkörper und/oder die Musiknotenzeichen und Musik-Hilfszeichen wiedergebenden Gummistempel in einer Gerätebox mit Fachabteilungen zur Aufbewahrung und zur Entnahme untergebracht. In den einzelnen Fachabteilugen können die Formkörper und/oder Druckstöcke bzw. Gummistempel nach Farbe und/oder Wertigkeit geordnet abgelegt werden, so dass sie zum weiteren Gebrauch schnell wieder auffindbar sind.

Im Vergleich zu bereits bekannten Lernhilfen ist das erfindungsgemässe Gerät sehr breit entwickel- und anwendbar, und es ist trotz grossen Formats gut tragbar. Es kann daher auch in externen Unterrichtsräumen, z.B. Kindergärten oder dgl. Einrichtungen, beim Musikunterricht und zum Üben zu Hause gut benutzt werden.

Weitere Merkmale und Besonderheiten der Erfindung werden anhand der in der Zeichnung dargestellten Ausführungsbeispiele im folgenden beschrieben und näher erläutert:

Es zeigen
- Fig. 1: das Lerngerät in Form einer zweiteiligen, aufgeklappten Tafel mit zwei auf der Arbeitsoberfläche aufgebrachten Notensystemen,
- Fig. 2: das Lerngerät nach Fig. 1 mit in den Notensystemen angeordneten verschiedenen Musikzeichen und Musiknoten, sowie (im unteren Teil der Darstellung) eine Wiedergabe einiger gebräuchlicher Musikzeichen und Husiknoten,
- Fig. 3: Beispiele von Notentabellen in einigen verschieden gewählten Ausführungen und zwar a für Klavier in Deutsch
b für Klavier in Englisch
c für ein Melodie-Instrument in Deutsch
d für Viola in Deutsch
e für ein Melodie-Instrument in Italienisch
f für ein Bass-Instrument in Deutsch,

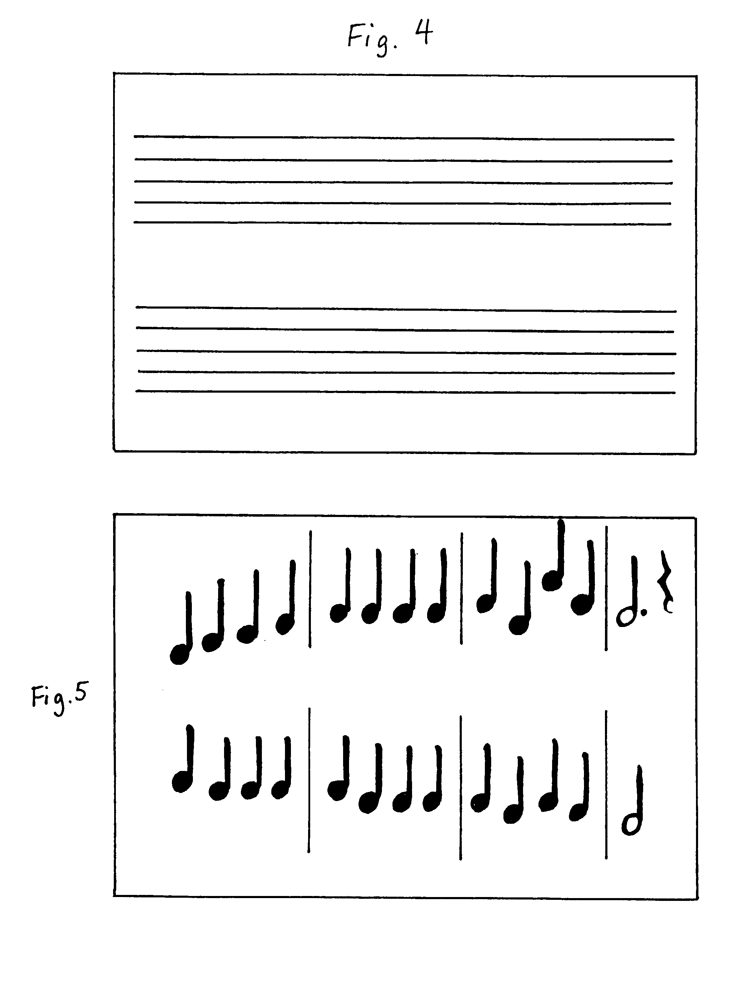

- Fig. 4: eine undurchsichtige oder durchsichtige beschreibbare Folie mit zwei Notensystemen,
- Fig. 5: eine durchsichtige Folie mit den Musikzeichen einer Melodie, zum Auflegen auf die Folie gemäss Fig. 4,

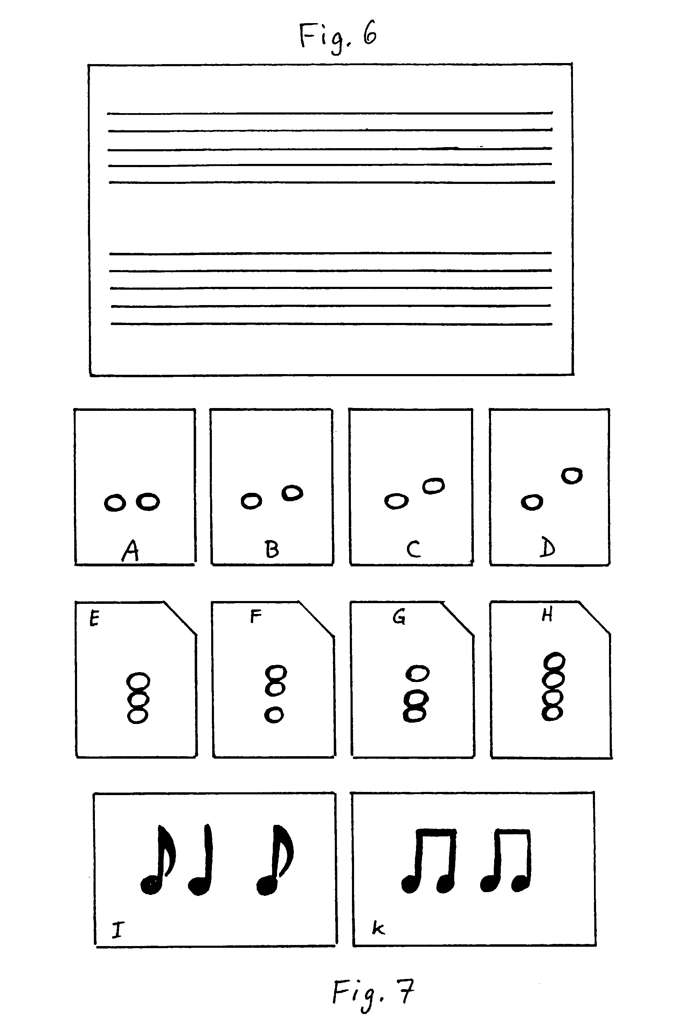

- Fig. 6: eine undurchsichtige oder durchsichtige beschreibbare Folie mit zwei Notensystemen,
- Fig. 7: durchsichtige Folien mit A, B, C, D verschiedenen Intervallen E, F, G, H verschiedenen Akkorden I, K verschiedenen Rhythmen,
- Fig. 8: durchsichtige Folien mit 8.1 und 8.2 verschiedenen Rhythmen 8.3 bis 8.6 verschiedene Kreuz-Tonartvorzeichen 8.7 bis 8.10 verschiedene Be-Tonartvorzeichen,
- Fig. 9: Darstellung der Gerätebox mit einzelnen Fachabteilungen,
- Fig. 10: Gummistempel mit Handgriff.

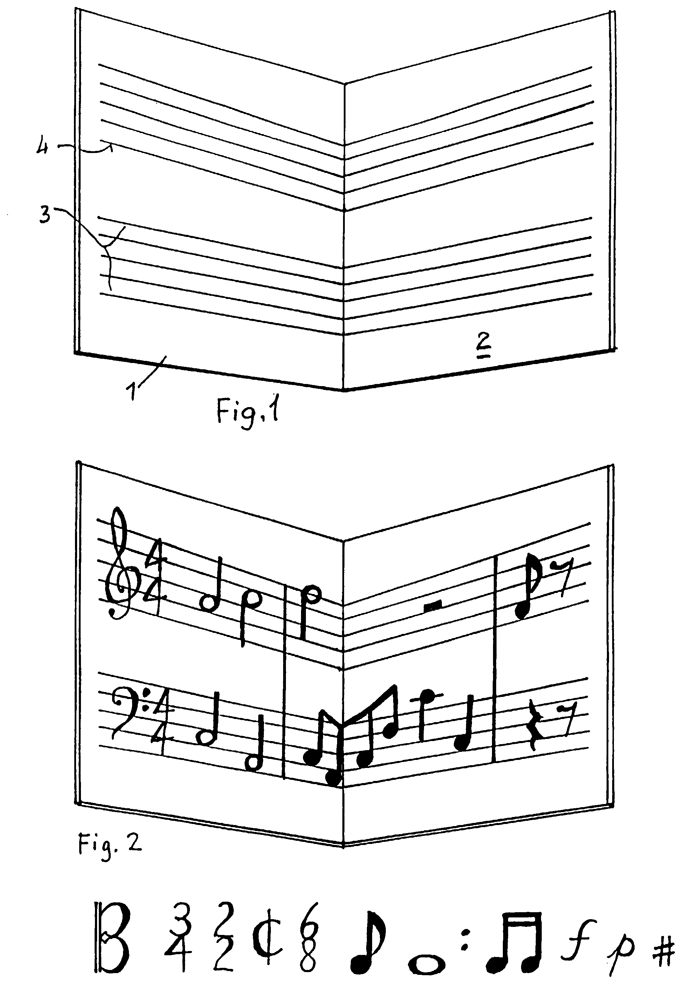

In Fig. 1 ist die zweiteilige, zusammenklappbare Tafel 1 des Lerngerätes dargestellt, die aus einem weitgehend biegefesten oder jedenfalls nicht ohne weiteres verformbaren Werkstoff, wie Holz, Karton, Plastik o.ä. besteht. Auf die Arbeitsoberfläche 2 der Tafel 1 sind zwei Notensysteme 3 mit ihren Notenlinien 4 fest und gut erkennbar aufgebracht. Bedeutsam ist, dass diese Linien 4 gegenüber der Arbeitsoberfläche 2 gut kontrastieren.Vorzugsweise erscheinen als Kontrastfarben schwarz oder grün für die Arbeitsoberfläche 2 und weiss oder gelb für die Notenlinien 4; aber auch andere Farbkontraste können zweckmässig sein.

Die Arbeitsoberfläche 2 der Tafel 1 ist mit - aus der Zeichnung nicht ersichtlich - einer haftenden, magnetischen Folie bzw. mit einem Filz-oder Klettbelag bestückt. Nach Figur 2 können die auf ihrer Unterseite mit dem Belag der Arbeitsoberfläche 2 zusammenwirkende Haftmaterialien aufweisenden Formkörper FK Noten wie auch alle übrigen Musikzeichen darstellen, und sie können auf diese Weise ausreichend haftend und auch wieder ablösbar auf der Arbeitsoberfläche 2 der Tafel 1 angebracht werden.

Die beispielhaft in der Fig. 2 (untere Zeile) dargestellte Auswahl an Musikzeichen können aus Metall, Plastik, Holz, Kautschuk oder einem anderen Werkstoff bestehen, der formsteif, aber auch plastisch etwas verformbar sein kann. Dabei können die als Formkörper FK ausgebildeten Musikzeichen sowohl als vollständige Musiknoten wie auch als einzelne zusammensetzbare Elemente von Noten ausgebildet sein; z. B. Notenköpfe, Notenhälse, Notenhalsverlängerungen wie auch Balken zum Verbinden von Notenhälsen u.a.m.

Die Notensysteme 3 und dazu gehörigen Musikzeichen sind zweckmäßigerweise in grösserem als dem in Notenpapier üblichen Massstab gehalten. Der Massstab wird so gewählt, daß eine kurze Melodie vollständig in dem auf der Tafel 1 vorhandenen Notensystem 3 Platz findet. Ein Abstand von ca. 12 bis 20 mm zwischen den Notenlinien 4 - je nach Grösse der Tafel 1 - hat sich als vorteilhaft erwiesen.

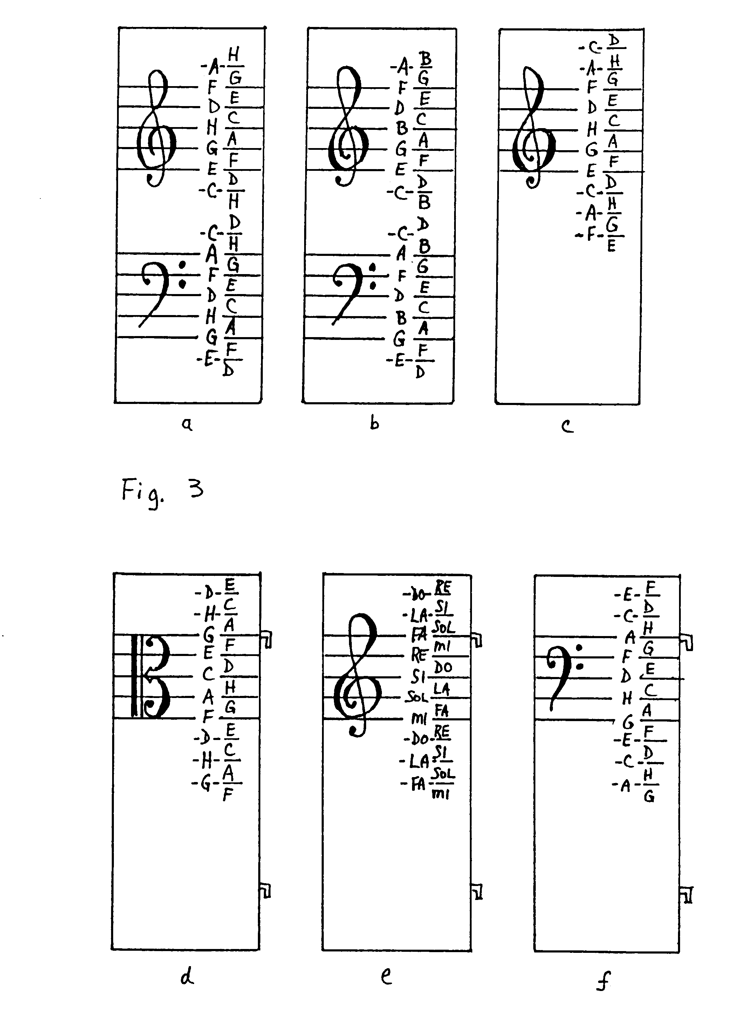

Wie aus Fig. 3 beispielhaft ersichtlich ist, können die Notentabellen a bis f für die verschiedensten Instrumente und für den Gebrauch verschiedensprachiger Lernender vorbereitet sein. Diese Notentabellen können aus einem festen oder plastisch etwas verformbaren oder auch aus einem transparenten Werkstoff bestehen.

Ferner können sie auch in unterschiedlicher Farbgebung ausgeführt sein. Sie sind besonders geeignet, um die Notennamen leicht auffinden zu können. Dazu sind die Notenlinien bzw. Notensysteme 3 im gleichen Hassstab wie die Notensysteme auf der Arbeitsoberfläche 2 gehalten; daher können die transparenten Notentabellen auf die Arbeitsoberfläche aufgelegt und innerhalb der Notensysteme verschoben werden. Es ist auch möglich, die Notentabellen ein- oder beidseitig an der Tafel 1 anzubringen oder unter Anwendung von Befestigungsmitteln, z.B. Häkchen und ösen zu befestigen, oder aber auch in Führungen seitlich zu verschieben.

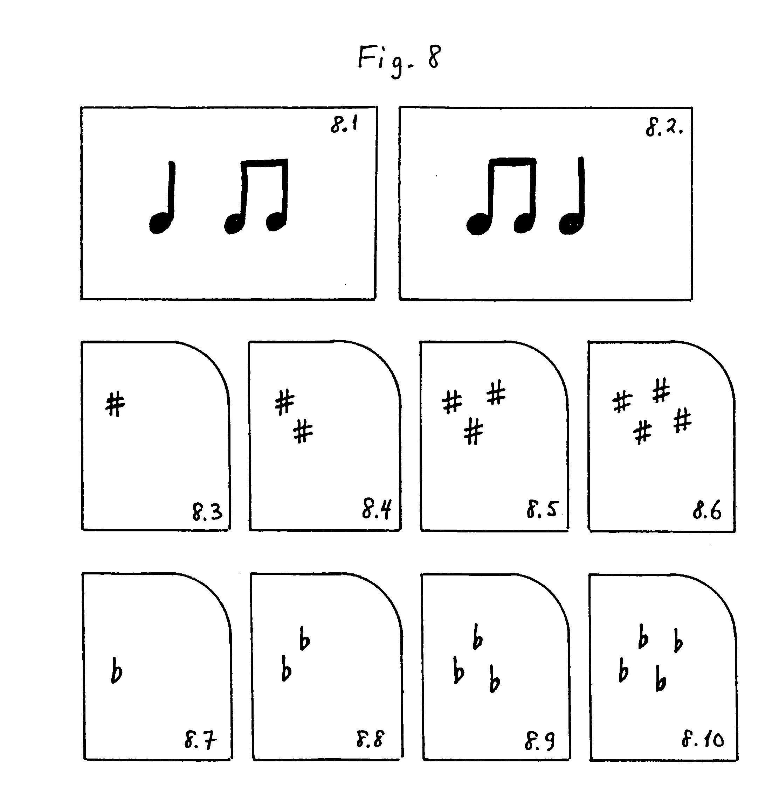

Eine weitere Bereicherung des Geräts ist durch die undurchsichtigen oder vor allem auch transparenten Folien geschaffen, wie diese aus den Fig. 7 und 8 ersichtlich sind. Diese können beispielsweise verschiedene Intervalle A, B, C, D oder verschiedene Akkorde E, F, G, H oder auch verschiedene Rhythmen I oder K erkennen lassen.

Damit ist die Verwendungsmöglichkeit dieser Folien nicht erschöpft, sondern es können auch - siehe Fig. 8 - verschiedene Rhythmen 8.1 und 8.2 und die verschiedenen Tonart-Vorzeichen, wie z.B. die vier Kreuz-Tonartvorzeichen 8.3 bis 8.6 oder die verschiedenen Be-Tonart-Vorzeichen 8.7 bis 8.10 gut erkennbar und einprägsam dargestellt sein. Auch sind die Notensysteme 3 der durchsichtigen Folien übereinstimmend mit den Notensystemen auf der Arbeitsoberfläche 2, so dass beim Auflegen der Folien diese in ihrer Tonhöhe verschoben werden können.

Daher können diese Notentabellen und Folien dazu dienen, das Erlernen und Umgehen mit Melodien, Intervallen, Akkorden, Rhythmen, Tonartvorzeichen. Transponieren und Notenschlüsseln zu erleichtern.

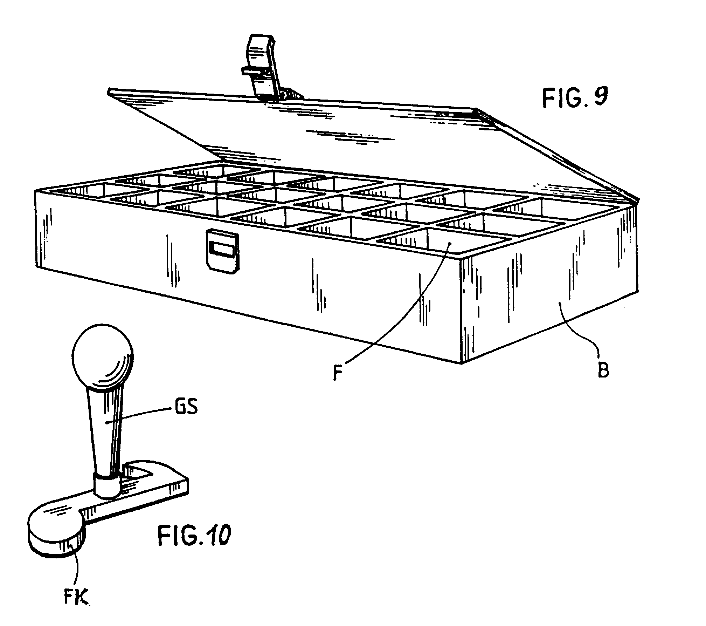

Die Gerätebox B des Lerngerätes ist in Fig. 9 mit den einzelnen Fachabteilungen F zur geordneten Auf- und Entnahme der Formkörper FK dargestellt. Diese können nach Art der Musikzeichen, die sie verkörpern und/oder auch nach ihrer farblichen Gestaltung geordnet sein, um ihre schnelle, problemlose Verfügung zu sichern. Fig. 10 zeigt die Musikzeichen in Form von Gummistempeln GS mit einem Griff zur leichteren Handhabung. Das jeweilige Musikzeichen kann auf die Tafel 1 oder auf eine auf diese aufgebrachte Folie aufgedrückt werden.

## Patentansprüche

1. Lerngerät zum Notenlernen mit einer ebenen zwei- oder
mehrteiligen zusammenklappbaren Tafel (1, 10), aus einem nahezu formsteifen Werkstoff mit einer beschrift-oder bedruckbaren, mit einer Haftfilz- oder Magnetfolie oder einer mit vergleichbaren Haftmitteln versehenen Folie bedeckten Arbeitsoberfläche (2), die gut erkennbare, nicht ablösbare und aus Notenlinien (4) bestehende Notensysteme (3) aufweist, wobei das Lerngerät leichte, an ihrer Unterseite mit Kletten- oder Magnet- oder dgl. Haftmitteln versehene Formkörper (FK) in Gestalt von sämtlichen beim Notensetzen im Gebrauch befindlichen Musiknotenzeichen und Musik-Hilfszeichen aufweist, die von Hand leicht aufbringbar und ablösbar auf der Folie der Arbeitsoberfläche (2) befestigbar sind, wobei die Husiknotenzeichen aus einem formsteifen oder leicht plastisch verformbaren Kautschuk bestehen und an ihrer Oberfläche farbbeschichtet sind oder aus Materialien unterschiedlicher Farbe bestehen,
dadurch gekennzeichnet,
dass das Lerngerät weitere Musiknotenzeichen und Musik-Hilfszeichen wiedergebende Druckstöcke oder Stempel (GS) mit je einem Handgriff und einer mit diesem verbundenen, den Farbstoff aufnehmenden, Markierungsstriche aufweisenden und aus Gummi bestehenden Markierungsplatte aufweist,
dass das Lerngerät aus einem festen oder plastisch verformbaren oder auch aus einem transparenten Werkstoff bestehende Notentabellen von im wesentlichen rechteckigen Format aufweist, auf denen Noten in ihrer Lage im Notensystem mit ihren Namensbezeichnungen und dem jeweils zugehörigen Notenschlüssel aufgebracht sind,
dass das Lerngerät Abdeckplatten zum teilweisen Abdecken der Arbeitsoberfläche (2) aufweist, die wenigstens einen Ausschnitt aufweisen, welcher gerade gross genug ist, um einzelne Musiknoten oder einige Husiknoten zur Betrachtung freizugeben.
und dass das Lerngerät im zusammengeklappten Zustand der Tafel (1, 10) ein in einer Schul- oder Tragemappe unterzubringendes Format aufweist.

2. Lerngerät nach Anspruch 1, dadurch gekennzeichnet, dass
die Notentabellen eine beidseitige oder allseitige Randverstärkung aufweisen und mit wechselseitig zusammenwirkenden Befestigungsmitteln zur Herstellung einer kraftschlüssigen Befestigungsverbindung auf der Arbeitsoberfläche (2) versehen sind.

3. Lerngerät nach Anspruch 1, dadurch gekennzeichnet, dass
die dünnwandigen, auf ihrer Rückseite ein Haftmittel aufweisenden Formkörper (FK) mit einer leichtabziehbaren Schutzfolie versehen sind.

4. Lerngerät nach Anspruch 1, gekennzeichnet durch mit No-
tensystemen versehene Notenfolien von kleinerem Format als die Tafel (1), bestehend aus einem transparenten, nahezu formsteifen oder leicht plastisch verformbaren Werkstoff, die auf die Tafel (1) mit dem feststehenden Notensystem gegenüber diesem in verschiedene Höhen- und Breitenlagen versetzt auflegbar sind.

5. Lerngerät nach Anspruch 1, dadurch gekennzeichnet, dass
die auf der Tafel (1) ein- oder beidseitig, farblich gegenüber der Oberfläche und den Farben der Formkörper (FK) kontrastierenden Notensysteme (3) gegenüber den Normalabmessungen vergrösserten Abstände der Notenlinien von 12 bis 20 mm aufweisen.

6. Lerngerät nach Anspruch 1, dadurch gekennzeichnet, dass
das auf der Arbeitsoberfläche (2) angeordnete Notensystem (3) durch Auflage einer Folie mit senkrecht zu den vorhandenen Notenlinien verlaufenden Linien ergänzbar ist.

7. Lerngerät nach Anspruch 1 oder einem
der Ansprüche 2 bis 6, dadurch gekennzeichnet, dass die Formkörper (FK) und/oder die Musiknotenzeichen und Musik-Hilfszeichen wiedergebenden Gummistempel (GS) in einer Gerätebox (B) mit Fachabteilungen (F) zur Aufbewahrung und zur Entnahme untergebracht sind.

## Claims

1. Teaching device for learning notes with a plain folding
slab of two or more parts (1, 10) of an almost dimensionally stable material having a working surface (2) covered with an inscribable or printable foil showing a thin adhesive felt, a magnetic foil or a sheeting being provided with comparable stickers, this surface having distinct and non-detachable staffs (3) consisting of music lines (4), and such a device shows some lightweight note components (FK) being fitted, at their bottom side, with Velcro closers, magnetic fasteners or similar stickers and having the shape of all music note signs and auxiliary music signs in use for composition, these components can easily be mounted and fastened, by hand, on the foil of the working surface (2) as well as detached from said foil, and here the music note signs consist of a dimensionally stable or somewhat plastically deformable caoutchouc, same being coated, at their surface, with colouring matter or made up of materials of different colour,
characterized in that
the teaching device comprises some printing blocks or stamps (GS) with one each handle and a marking plate to reproduce further music note signs and auxiliary music signs, this plate consisting of rubber, being connected with the handle, receiving the ink and showing some reference lines,
the teaching device has some note charts of a firm, plastically deformable or of a transparent material and mainly in a rectangular format on which the notes have been deposited in their position within the staff together with their designations and the respective clef,
the teaching device comprises some cover plates to partially mask the working surface (2) and showing at least one cutout, just large enough to permit the view of single music notes or a sequence of notes, and that,with slab (1, 10) folded,
the teaching device has a format which allows it to be accommodated in a school-bag or a carrier bag.

2. Teaching device according to claim 1, characterized in that
the note charts have a strengthened border at both or all sides and mutually cooperating fixtures to obtain an attachment by adherence on the working surface (2).

3. Teaching device according to claim 1, characterized in that
the thin-wall note components (FK) have been fitted with easily peelable protection sheeting, their rear side showing a sticker.

4. Teaching device according to claim 1,
characterized by
note sheets provided with staffs of which the size is smaller than that of the slab (1), such sheets made of a transparent, almost dimensionally stable or lightly plastically deformable material can be laid on the fixed-staff slab (1) in such a way that, referred to said staff, they will be displaced to different levels and width positions.

5. Teaching device according to claim 1, characterized in that
the staffs (3), at one or both sides of the slab (1), have greater spaces between the music lines as compared to the standard dimensions, viz. 12 to 20 mm, and the colour of said staffs will contrast with the surface and the colours of the note components (FK).

6. Teaching device according to claim 1, characterized in that
the staff (3), arranged on the working surface (2), can be completed by any lines being at a right angle to the music lines available on placing a foil.

7. Teaching device according to claim 1 or one of the claims 2 to 6, characterized in that
the note components (FK) and/or rubber stamps (GS) reproducing the music note signs and auxiliary music signs are accommodated in a box (B) with compartments (F) for storage and collection.

## Revendications

1. Appareil didactique pour apprendre des notes comportant un tableau plan et repliable, en une seule ou plusieurs pièces (1, 10) et en une matière quasi indéformable, avec une face de travail (2), inscriptible ou imprimable, recouverte d'une couche mince de feutre adhésif ou d'une feuille magnétique ou d'une pellicule dotée des agents adhésifs comparables, face comportant des portées (3) bien perceptibles, non détachables et composées de lignes (4), appareil présentant des corps de note (FK) légers prenant la forme de tous les signes de notes musicales et signes musicaux auxiliaires en usage lors de la composition, dont les faces inférieures ont été dotées des rubans cramponnants, couches magnétiques ou pareils agents adhésifs, facilement montables et fixables sur et détachables, tout à la main, de la feuille de face de travail (2), les signes de notes musicales consistant en un caoutchouc indéformable ou permettant une déformation plastique légère, la surface de ces signes étant revêtue d'une couche de colorant ou ces derniers comportant des matières de différentes couleurs,
caractérisé par ce que
l'appareil didactique présente des clichés ou des timbres (GS) pour reproduire encore d'autres signes de notes musicales et signes musicaux auxiliaires, clichés ou timbres ayant chacun un manche et une plaquette de marquage en caoutchouc attachée à ce dernier, recevant l'encre et indiquant des repères,
l'appareil didactique comprend des relevés de notes en une matière ferme ou plastiquement déformable ou, encore, en matière transparente, relevés essentiellement d'un format rectangulaire et présentant des notes à leur position dans la portée avec leurs dénominations et la clef respective y appartenant,
l'appareil didactique comporte des plaques de recouvrement pour masquer certaines parties de la face de travail (2), plaques ayant, au moins, un évidement suffisamment grand pour laisser voir des notes de musique séparées ou une suite de plusieurs notes, et que
l'appareil didactique, en état replié du tableau (1, 10), présente un format qui permettra de le caser dans une serviette ou un sac.

2. Appareil didactique selon revendication 1, caractérisé par ce que
les tableaux de notes présentent, des deux ou de tous les côtés, un bord renforcé et qu'ils ont été munis des éléments de fixation alternativement concourants pour réaliser une adhérence sur la face de travail (2).

3. Appareil didactique selon revendication 1, caractérisé par ce que
les corps de note (FK), en paroi mince, dont le dos présente un agent adhésif, ont été pourvus d'une pellicule de protection facile à peler.

4. Appareil didactique selon revendication 1, caractérisé par
des feuilles de notes, en une matière transparente, quasi indéformable ou présentant une déformation plastique légère, pourvues de portées,dont le format est plus petit que celui du tableau (1), feuilles à poser sur le tableau (1) comportant la portée fixe, soit décalées par rapport à cette dernière et en différents niveaux et largeurs.

5. Appareil didactique selon revendication 1, caractérisé par ce que
les portées (3), d'un seul ou des deux côtés, dont la couleur contraste de la surface et des couleurs de corps de note (FK) présentent des écarts entre lignes plus grands par rapport aux dimensions standard, soit de 12 à 20 mm.

6. Appareil didactique selon revendication 1, caractérisé par ce que
la portée (3) se trouvant sur la face de travail (Z) pourra se compléter de lignes, perpendiculairement aux lignes disponibles, par la pose d'une feuille.

7. Appareil didactique selon revendication 1 ou une des revendications 2 à 6, caractérisé par ce que
les corps de note (FK) et/ou les timbres en caoutchouc (GS) reproduisant des signes de notes musicales et signes musicaux auxiliaires, se trouvent dans un box (B) comportant des casiers (F) pour le dépôt et la reprise.
